# EUROPEAN PATENT SPECIFICATION

(11) **EP 4 124 730 B1**
(45) Date of publication and mention of the grant of the patent: **22.05.2024**
(21) Application number: 22186641.1
(22) Date of filing: 25.07.2022
(51) Int. Cl.: F01N 3/36, F01N 3/025, F01N 3/20

(54) **METHOD TO CONTROL AN EXHAUST GAS AFTER-TREATMENT SYSTEM FOR AN EXHAUST GAS SYSTEM OF AN INTERNAL COMBUSTION ENGINE**
VERFAHREN ZUM STEUERN EINES ABGASNACHBEHANDLUNGSSYSTEMS FÜR EIN ABGASSYSTEM EINES VERBRENNUNGSMOTORS
PROCÉDÉ POUR COMMANDER UN SYSTÈME DE POST-TRAITEMENT DE GAZ D'ÉCHAPPEMENT POUR UN SYSTÈME DE GAZ D'ÉCHAPPEMENT D'UN MOTEUR À COMBUSTION INTERNE

(30) Priority: 29.07.2021 IT 202100020318
(43) Date of publication of application: 01.02.2023
(73) Proprietor: Marelli Europe S.p.A., 20011 Corbetta (MI) (IT)
(72) Inventor: SENSI, Fabio, 40033 CASALECCHIO DI RENO (BO) (IT); CAVANNA, Filippo, 40139 BOLOGNA (IT)
(74) Representative: Studio Torta S.p.A.

(56) References cited:
- EP-A2- 2 282 025
- US-A1- 2005 150 216
- US-A1- 2014 238 002

## Description

### TECHNICAL SECTOR

The invention relates to a method to control an exhaust gas after-treatment system for an exhaust system of an internal combustion engine.

### PRIOR ART

An internal combustion engine is typically provided with a number of cylinders, each connected to an intake manifold and to an exhaust manifold, to which an exhaust duct is connected in order to feed the exhaust gases produced by the combustion an exhaust system, which releases the exhaust gases produced by the combustion into the atmosphere.

An exhaust gas after-treatment system usually comprises a pre-catalytic converter, which is arranged along the exhaust duct; a particulate filter, which is also arranged along the exhaust duct, downstream of the pre-catalytic converter; and a catalytic converter, which is arranged along the exhaust duct, upstream of the particulate filter.

The exhaust gas after-treatment system finally comprises, in addition, a burner, which is suited to introduce exhaust gases (and, as a consequence, heat) into the exhaust duct in order to speed up the heating of the catalytic converter and so as to facilitate the regeneration of the particulate filter. Inside the burner there is defined a combustion chamber, which receives fresh air from an air feeding circuit and receives fuel from an injector, which is suited to inject fuel into the combustion chamber. Furthermore, a spark plug is coupled to the burner in order to ignite the mixture present inside the combustion chamber.

The exhaust gases produced by the burner have a pollutant concentration that proves to be particularly high during an initial burner starting phase. During this initial phase, the temperature of the catalytic converter is lower than the activation temperature and, therefore, the catalytic converter has an extremely low power of conversion of the pollutants produced by the burner.

US2005150216, US2014238002 and EP2282025 describe respective methods to control an exhaust gas after-treatment system for an exhaust system of an internal combustion engine of the known type.

Hence, the pollutants released into the atmosphere and produced both by the internal combustion engine and by the burner, especially during the burner starting phase, must be reduced.

### DESCRIPTION OF THE INVENTION

The object of the invention is to provide a method to control an exhaust gas after-treatment system for an exhaust system of an internal combustion engine, which does not suffer from the drawbacks described above and, in particular, is easy and economic to be implemented.

According to the invention there is provided a method to control an exhaust gas after-treatment system for an exhaust system of an internal combustion engine according to the appended claims.

### BRIEF DESCRIPTION OF THE DRAWINGS

The invention will now be described with reference to the accompanying drawings showing a non-limiting embodiment thereof, wherein:
- figure 1 schematically shows an internal combustion engine provided with an exhaust gas after-treatment system;
- figure 2 schematically shows a detail of the exhaust gas after-treatment system shown in figure 1;
- figure 3 shows a dashboard, which frontally delimits a passenger compartment of a vehicle and is connected to an electronic control unit implementing the control method according to the invention.

### PREFERRED EMBODIMENTS OF THE INVENTION

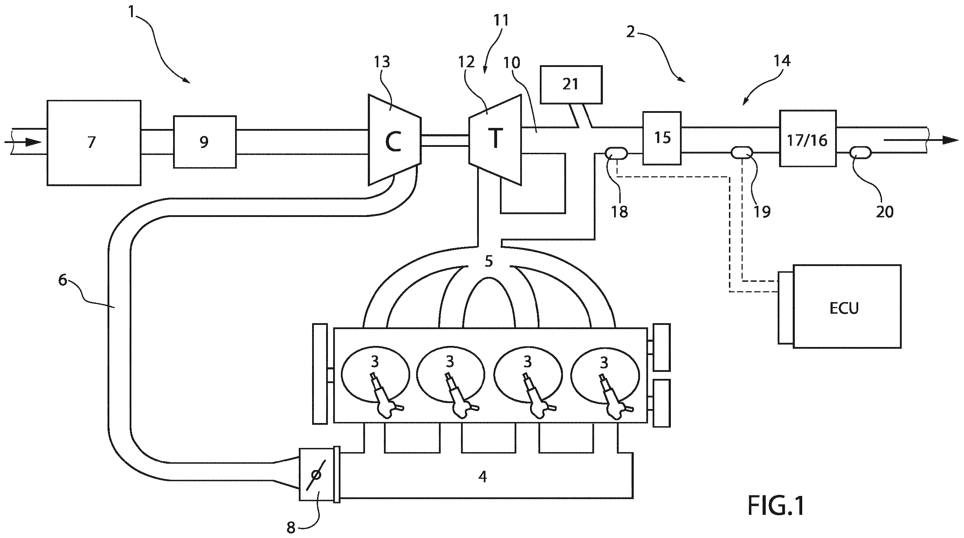

In figure 1, number 1 indicates, as a whole, a supercharged internal combustion engine provided with an exhaust system 2 (not shown) and having a number of cylinders 3, each connected to an intake manifold 4 and to an exhaust manifold 5 by means of at least one respective exhaust valve (not shown).

The intake manifold 4 receives a gas mixture comprising both exhaust gases and fresh air, i.e. air coming from the outside through an intake duct 6, which is provided with an air filter for the fresh air flow and is regulated by a throttle valve 8. Along the intake pipe 6, downstream of the air filter 7, there also is an air flow meter 9.

The exhaust manifold 5 is connected to an exhaust duct 10, which feeds the exhaust gases produced by the combustion to the exhaust system 2, which releases the gases produced by the combustion into the atmosphere.

The supercharged internal combustion engine 1 comprises supercharging system 11 for the internal combustion engine 1 obtained by means of a turbocharger 11 provided with a turbine 12, which is arranged along the exhaust duct 10 so as to rotate at a high speed due to the action of the exhaust gases expelled from the cylinders 3, and a compressor 13, which is arranged along the intake duct 6 and is mechanically connected to the turbine 12 so as to be caused to rotate by the turbine 12 itself in order to increase the pressure of the air present in the feeding duct 6.

The exhaust system 2 is provided with an exhaust gas after-treatment system 14 comprising a pre-catalytic converter 15 arranged along the exhaust duct 10, downstream of the turbocharger 11, and a particulate filter 16 (also known as *Gasoline Particulate Filter*) also arranged along the exhaust duct 10, downstream of the pre-catalytic converter 15. According to a preferred variant, the exhaust gas after-treatment system 14 is provided with a catalytic converter 17 arranged along the exhaust duct 10, upstream of the particulate filter 16. According to a preferred embodiment, the catalytic converter 17 and the particulate filter 16 are arranged one after the other on the inside of a common tubular container.

According to a first variant, the internal combustion engine 1 is further provided with a UHEGO or UEGO linear oxygen sensor 18 housed along the exhaust duct 10 and interposed between the turbocharger 11 and the pre-catalytic converter 15 to detect the air/fuel ratio of the exhaust gases (providing a liner output that indicates the content of oxygen in the exhaust gases) downstream of the turbocharger 11 and upstream of the pre-catalytic converter 15.

The internal combustion engine is further provided with a lambda sensor 19, which is suited to provide an on/off binary output, which indicates whether the air/fuel ratio of the exhaust gases is higher or lower than the stoichiometric value, is housed along the exhaust duct 10 and is interposed between the pre-catalytic converter 15 and the assembly defined by the catalytic converter 17 and the particular filter 16 in order to detect the concentration of oxygen in the exhaust gases downstream of the pre-catalytic converter 15; and, finally, a lambda sensor 20, which is suited to provide an on/off binary output, which indicates whether the air/fuel ratio of the exhaust gases is higher or lower than the stoichiometric value, is housed along the exhaust duct 10 and is arranged downstream of the assembly defined by the catalytic converter 17 and the particular filter 16 in order to detect the concentration of oxygen in the exhaust gases downstream of the assembly defined by the catalytic converter 17 and the particular filter 16.

The exhaust gas after-treatment system 14 further comprises a burner 21, which is suited to introduce exhaust gases (and, as a consequence, heat) into the exhaust duct 10 in order to speed up the heating of the pre-catalytic converter 15 and/or of the catalytic converter 17 and so as to facilitate the regeneration of the particulate filter 16. The burner 21 is arranged so as to introduce exhaust gases into the exhaust duct 10 upstream of the pre-catalytic converter 15 or downstream of the catalytic converter 17.

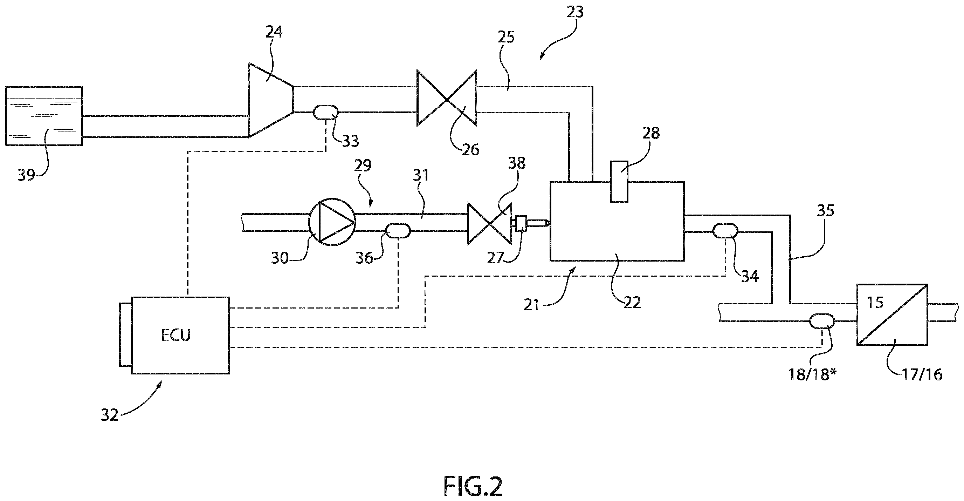

According to figure 2, inside the burner 21 there is defined a combustion chamber 22, which receives fresh air (i.e. air coming from the outside) through an air feeding device 23, which is provided with a pumping device 24 pumping from a tank 39, preferably with the interposition of an air filtering element, and feeds air by means of a duct 25.

The combustion chamber 22 further receives fuel from an injector 27, which is suited to inject fuel into the combustion chamber 22. Furthermore, a spark plug 28 is coupled to the burner 21 in order to ignite the mixture present inside the combustion chamber 22. The internal combustion engine 1 also comprises a fuel feeding circuit 29 provided with a pumping device 30, which feeds fuel by means of a duct 31, which is adjusted by a valve 38.

The internal combustion engine 1 finally comprises a control system 32, which is designed to control the operation of the internal combustion engine 1. The control system 32 comprises at least one electronic control unit (also known as "ECU"), which controls the operation of the different components of the internal combustion engine 1.

The spark plug 28 is controlled by the electronic control unit ECU so as to generate a spark between its electrodes, thus determining the ignition of the gases compressed inside the combustion chamber 22. The control system 32 further comprises a plurality of sensors connected to the electronic control unit ECU.

The sensors comprise, in particular, a temperature and pressure sensor 33 for the air flow fed to the burner 21, which is preferably housed along the duct 25; a temperature and pressure sensor 34 for the exhaust gases flowing out of the burner 21, which is housed along an outlet duct 35; a pressure sensor 36 for the fuel fed to the burner 21, which is housed along the duct 31. The electronic control unit ECU is further connected to the UHEGO or UEGO linear oxygen sensor 18 and to the lambda sensors 19, 20, from which it receives signals indicative of the air/fuel ratio of the exhaust gases.

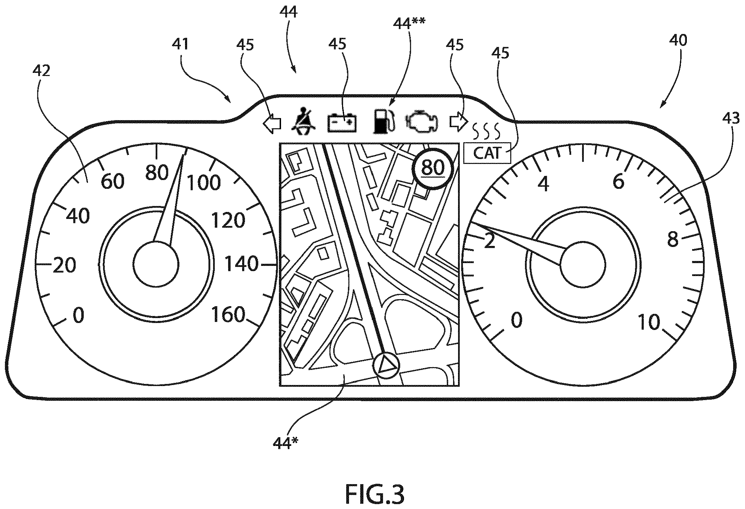

In figure 3, number 40 indicates a dashboard supported by a dash panel (not shown), which frontally delimits a passenger compartment of a vehicle. The dashboard 40 is arranged in front of the driver immediately behind a steering wheel. The dashboard 40 comprises a screen 41, which usually is completely programmable (namely, it can be programmed to display any type of information). The dashboard 40 comprises at least an analogic pointer instrument 42 (namely, an instrument using a movable pointer) to indicate the measure of the speed of the vehicle and an analogic pointer instrument 43 (namely, an instrument using a movable pointer) to indicate the measure of the number of revolutions per minute of the internal combustion engine 1.

The dashboard 40 is further provided with a plurality of graphic areas indicated with 44. In the particular example described herein, the graphic areas 44 comprises a graphic area 44* where a road map is displayed in order to assist the driver while driving and a graphic area 44** comprising, in turn, a number of indicators 45 (or lights 45) suited to provide the driver with respective items of information of the drive and/or on the state of the vehicle.

In particular, the graphic area 44** comprises an indicator 45 controlled by the electronic control unit ECU and designed to provide indications concerning the burner 21.

In use, the normal operation of the exhaust gas after-treatment system 14 entails the work conditions disclosed in the description below.

During a starting step, the electronic control unit ECU is suited to keep the indicator 45 turned on. In this starting step, the internal combustion engine 1 is turned off while the burner 21 is caused to turn on. During the starting step, the temperature of the pre-catalytic converter 15 and/or of the catalytic converter 17 is lower than an activation temperature and the concentration of pollutants produced by the burner 21 (detected by one of the sensors 18, 19, 20 downstream of the burner 21) is greater than a limit value. The starting step starts when the electronic control unit ECU detects the presence of the key and/or when the doors are unlocked through a command of the driver from the remote control.

On the other hand, the starting step ends when the electronic control unit ECU detects a temperature of the pre-catalytic converter 15 and/or of the catalytic converter 17 higher than or equal to the activation temperature; once the staring step has ended, the electronic control unit ECU is suited to turn off the indicator 45 and the driver can turn on the internal combustion engine 1.

In case the driver decides to turn on the internal combustion engine 1 before the indicator 45 is turned off (i.e., in other words, before the starting step has ended and before the temperature of the pre-catalytic converter 15 and/or of the catalytic converter 17 is higher than or equal to the activation temperature), the electronic control unit ECU is suited to keep the indicator 45 turned on until the following turning off of the internal combustion engine 1.

In a further step, as soon as a fault/malfunction of the burner 21 is detected, the electronic control unit ECU is suited to cause the indicator 45 to turn on so as to warn the driver of the fault/malfunction.

In case the burner 21 needs to be manually turned on by the driver of the vehicle, the indicator 45 is suited to warn the driver of the need to start the burner 21. The indicator 45 is turned on when the electronic control unit ECU detects the presence of the key and/or when the doors are unlocked through a command of the driver from the remote control, so that the driver can start the burner 21. Then, the indicator 45 is turned off when the electronic control unit ECU detects a temperature of the pre-catalytic converter 15 and/or of the catalytic converter 17 higher than or equal to the activation temperature.

The temperature of the pre-catalytic converter 15 and/or of the catalytic converter 17 can alternatively be detected by means of dedicated sensors or estimated by the electronic control unit ECU.

It is evident that the electronic control unit ECU disclosed in the description above can be a dedicated control unit ECU, which controls the operation of the burner 21, or can be the electronic control unit ECU controlling the operation of the internal combustion engine 1. Furthermore, it should be pointed out that the connection between the electronic control unit ECU and the indicator 45 can alternatively be obtained by means of a CAN or wired connection.

The exhaust gas after-treatment system 14 and the method described so far feature several advantages; in particular, they reduce the pollutants released into the atmosphere produced by the burner 21 during the starting step of the burner 21.

### LIST OF REFERENCE NUMBERS

- 1: internal combustion engine
- 2: exhaust system
- 3: cylinders
- 4: intake manifold
- 5: exhaust manifold
- 6: intake duct
- 7: air filter
- 8: throttle valve
- 9: air flow meter
- 10: exhaust duct
- 11: turbocharger
- 12: turbine
- 13: compressor
- 14: after-treatment system
- 15: pre-catalytic converter
- 16: particulate filter
- 17: catalytic converter
- 18: linear sensor
- 19: lambda sensor
- 20: lambda sensor
- 21: burner
- 22: combustion chamber
- 23: air feeding circuit
- 24: pumping device
- 25: duct
- 26: shut-off valve
- 27: injector
- 28: spark plug
- 29: fuel feeding circuit
- 30: pumping device
- 31: duct
- 32: control system
- 33: P, T sensor
- 34: P, T sensor
- 35: outlet duct
- 36: P, T sensor
- 38: valve
- 39: air tank
- 40: dashboard
- 41: screen
- 42: analogic instrument
- 43: analogic instrument
- 44: graphic area
- 45: indicators
- ECU: electronic control unit

## Claims

1. A method to control an exhaust gas after-treatment system (14) for an exhaust system (2) of an internal combustion engine (1) having an exhaust duct (10); the system (14) comprises at least one catalytic converter (15, 17) arranged along the exhaust duct (10); a burner (21), which is suited to introduce exhaust gases into the exhaust duct (10), is arranged along the exhaust duct (10) upstream of the said at least one catalytic converter (15, 17) and is designed to speed up the heating of said at least one catalytic converter (15, 17), wherein inside the burner (21) there is defined a combustion chamber (22), which receives fresh air through an air feeding circuit (23), which is provided with a pumping device (24) housed along a duct (25), and fuel from an injector (27), which is designed to inject fuel into the combustion chamber (22); a spark plug (28) coupled to the burner (21) so as to determine the ignition of the mixture present inside the combustion chamber (22); and an indicator (45), which is housed in a dashboard (40) of a vehicle provided with the internal combustion engine (1) and is designed to provide a driver of the vehicle with indications concerning the burner (21); the method comprises:
a starting step, during which the internal combustion engine (1) is turned off, the burner (21) is turned on and the indicator (45) is turned on; wherein said starting step starts when the presence of the key is detected or when the doors of the vehicle are unlocked through a command of the driver; and it ends when the temperature of said at least one catalytic converter (15, 17) is higher than or equal to an activation temperature; once the starting step has ended, an electronic control unit (ECU) is suited to turn off the indicator (45) and the driver can turn on the internal combustion engine (1);
a normal operation step of the internal combustion engine, which is subsequent to the starting step and during which the internal combustion engine (1) is turned on; and
keeping the indicator (45) turned on until the internal combustion engine (1) is turned off, in case the internal combustion engine (1) is started before the temperature of said at least one catalytic converter (15, 17) is higher than the activation temperature.

2. The method according claim 1 and comprising the further step of causing said indicator (45) to be turned on when a fault/malfunction of the burner (21) is detected, so as to warn the driver of the fault/malfunction.

3. The method according to any claim 1 or 2, wherein the temperature of said at least one catalytic converter (15, 17) alternatively is measured or estimated.

## Patentansprüche

1. Verfahren zur Steuerung eines Abgasnachbehandlungssystems (14) für eine Abgasanlage (2) eines Verbrennungsmotors (1) mit einem Abgaskanal (10); das System (14) umfasst mindestens einen Katalysator (15, 17), der entlang des Abgaskanals (10) angeordnet ist; einen Brenner (21), der geeignet ist, Abgase in den Abgaskanal (10) einzuleiten, und der entlang des Abgaskanals (10) stromaufwärts des mindestens einen Katalysators (15, 17) angeordnet ist und dazu ausgelegt ist, die Erwärmung des mindestens einen Katalysators (15, 17) zu beschleunigen, wobei im Inneren des Brenners (21) eine Verbrennungskammer (22) definiert ist, die Frischluft erhält durch einen Luftzufuhrkreislauf (23), der mit einer Pumpvorrichtung (24) versehen ist, die entlang eines Kanals (25) angeordnet ist, und die Kraftstoff von einer Einspritzdüse (27) erhält, die dazu bestimmt ist, Kraftstoff in die Verbrennungskammer (22) einzuspritzen; eine Zündkerze (28), die mit dem Brenner (21) gekoppelt ist, um die Zündung des in der Verbrennungskammer (22) vorhandenen Gemischs zu bestimmen; und eine Anzeige (45), die in einem Armaturenbrett (40) eines mit dem Verbrennungsmotor (1) versehenen Fahrzeugs untergebracht ist und dazu bestimmt ist, einem Fahrer des Fahrzeugs Angaben über den Brenner (21) bereitzustellen; wobei das Verfahren umfasst:
einen Startschritt, bei dem der Verbrennungsmotor (1) abgestellt wird, der Brenner (21) eingeschaltet wird und die Anzeige (45) eingeschaltet wird; wobei der Startschritt beginnt, wenn das Vorhandensein des Schlüssels erkannt wird oder wenn die Türen des Fahrzeugs durch einen Befehl des Fahrers entriegelt werden; und der Startschritt endet, wenn die Temperatur des mindestens einen Katalysators (15, 17) höher als oder gleich einer Aktivierungstemperatur ist; sobald der Startschritt beendet ist, ist eine elektronische Steuereinheit (ECU) geeignet, die Anzeige (45) auszuschalten, und der Fahrer kann den Verbrennungsmotor (1) einschalten;
einen normalen Betriebsschritt des Verbrennungsmotors, der sich an den Startschritt anschließt und währenddessen der Verbrennungsmotor (1) läuft; und die Anzeige (45) bleibt eingeschaltet, bis der Verbrennungsmotor (1) abgestellt wird, für den Fall, dass der Verbrennungsmotor (1) gestartet wird, bevor die Temperatur des mindestens einen Katalysators (15, 17) höher als die Aktivierungstemperatur ist.

2. Verfahren nach Anspruch 1, ferner umfassend den weiteren Schritt, dass die Anzeige (45) eingeschaltet wird, wenn eine Störung/Fehlfunktion des Brenners (21) erkannt wird, um den Fahrer vor der Störung/Fehlfunktion zu warnen.

3. Verfahren nach einem der Ansprüche 1 oder 2, wobei die Temperatur des mindestens einen Katalysators (15, 17) alternativ gemessen oder geschätzt wird.

## Revendications

1. Procédé pour commander un système de post-traitement de gaz d'échappement (14) pour un système d'échappement (2) d'un moteur à combustion interne (1) ayant un conduit d'échappement (10) ; le système (14) comprend au moins un convertisseur catalytique (15, 17) agencé le long du conduit d'échappement (10) ; un brûleur (21), qui est approprié pour introduire les gaz d'échappement dans le conduit d'échappement (10), est agencé le long du conduit d'échappement (10) en amont dudit au moins un convertisseur catalytique (15, 17) et est conçu pour accélérer le chauffage dudit au moins un convertisseur catalytique (15, 17), dans lequel à l'intérieur du brûleur (21), on définit une chambre de combustion (22), qui reçoit de l'air frais par un circuit d'alimentation en air (23), qui est prévu avec un dispositif de pompage (24) logé le long d'un conduit (25), et du combustible par un injecteur (27), qui est conçu pour injecter du combustible dans la chambre de combustion (22) ; et une bougie d'allumage (28) couplée au brûleur (21) afin de déterminer l'allumage du mélange présent à l'intérieur de la chambre de combustion (22) ; et un indicateur (45), qui est logé dans un tableau de bord (40) d'un véhicule doté du moteur à combustion interne (1) et est conçu pour fournir à un conducteur du véhicule les indications concernant le brûleur (21) ; le procédé comprend :
une étape de démarrage, pendant laquelle le moteur à combustion interne (1) est éteint, le brûleur (21) est mis en marche et l'indicateur (45) est activé ; dans lequel ladite étape de démarrage commence lorsque la présence de la clé est détectée ou lorsque les portes du véhicule sont déverrouillées par le biais d'une commande du conducteur ; et elle se termine lorsque la température dudit au moins un convertisseur catalytique (15, 17) est supérieure ou égale à une température d'activation ; une fois que l'étape de démarrage s'est terminée, une unité électronique de commande (ECU) est appropriée pour éteindre l'indicateur (45) et le conducteur peut mettre le moteur à combustion interne (1) en marche ;
une étape de fonctionnement normal du moteur à combustion interne, qui fait suite à l'étape de démarrage et pendant laquelle le moteur à combustion interne (1) est mis en marche ; et
maintenir l'indicateur (45) activé jusqu'à ce que le moteur à combustion interne (1) soit éteint, dans le cas dans lequel le moteur à combustion interne (1) est démarré avant que la température dudit au moins un convertisseur catalytique (15, 17) soit supérieure à la température d'activation.

2. Procédé selon la revendication 1 et comprenant l'étape supplémentaire pour amener ledit indicateur (45) à être activé lorsqu'une panne/dysfonctionnement du brûleur (21) est détecté(e), afin d'avertir le conducteur de la panne/du dysfonctionnement.

3. Procédé selon l'une quelconque des revendications 1 ou 2, dans lequel la température dudit au moins un convertisseur catalytique (15, 17) est, en variante, mesurée ou estimée.
